# EUROPEAN PATENT APPLICATION

(11) **EP 2 104 354 A1**
(43) Date of publication of application: **23.09.2009**
(21) Application number: 08380095.3
(22) Date of filing: 17.03.2008
(51) Int. Cl.: H04N 7/24, H04H 20/06, H04H 40/90

(54) **Method and apparatus for the conversion of DVB-S or DVB-C signals to DVB-T signals by PID filtration**

(71) Applicant: Promax Electronica, S.A., 08907 Hospitalet de Llobregat (ES)
(72) Inventor: Mas Raguer, Antoni, 08907 Barcelona (ES); Lago Fernandez, Jose Manuel, 08907 Barcelona (GB)
(74) Representative: Barroso Sánchez-Lafuente, Ignacio M.

(57) **Abstract**

Method for the cross-modulation of DVB-S or DVB-C signals to DVB-T signals by PID filtering, the signals being organized in transport streams of bits organized in packets, each one of which has a packet PID, which comprises demodulating, in a demodulator (1), a DVB-S or DVB-C signal, to obtain an initial transport stream TSx composed of elements or packets of bytes, from whose steams must be eliminated PES ("Packetized Elementary Stream") packets to adapt the transport rate. For all the packets of the initial transport stream TSx, the following phases are performed in a PID filter (2): read the PID identifier of each packet of the initial transport stream; if the PID identifier corresponds to a PID of a PES which must be eliminated, filter the PID marking this as NULL packet, with the marker reserved for the NULL packet, without modifying the program clock reference of the packets or the PSI tables, generating a filtered transport stream TSy.

## Description

### Technical field of the invention

The present invention relates to the technical field of telecommunications, more specifically to the broadcasting of digital signals. In particular, the invention relates to a method and to an apparatus for the cross-modulation of DVB-S or DVB-C signals to DVB-T signals by PID filtering, the signals being organized in bit transport streams organized in packets, each one of which has a packet PID, which comprises demodulating, in a demodulator or receptor, a DVB-S or DVB-C signal, to obtain an initial transport stream TS composed of elements or packets of bytes, from whose streams should be eliminated packets containing PES ("*Packetized Elementary Stream*") to adapt the transport rate.

### Background of the invention

The appearance of digital terrestrial television, DVB-T, has involved a series of important advantages: greater spectral efficiency with more TV services, greater robustness of the television signal, more efficient use of the radiated power, improvement in the planning of the television network, etc. DVB is the abbreviation for "*Digital Video Broadcasting*".

Digital Terrestrial Television (DTT) is the digital TV platform to which a great number of users shall migrate before the switch off of analogue television occurs in Europe. The availability of low cost DTT receivers and, more recently, the integration of said receivers within next generation flat screen televisions have facilitated the penetration of this new technology in a large number of domestic installations.

DTT is one of the transmission systems used to transmit a MPEG-2 transport stream (TS) to the end user. Standard DVB-T collects the technical details on the implementation of the digital terrestrial TV platform used in Europe. Other systems with large implementation make use of satellite transmission (DVB-S) or cable transmission (DVB-C).

In the last analysis, the different digital TV platforms of the DVB platform operate as simple transport stream containers. The MPEG-2 transport stream is the result of multiplexing an array of *Packetized Elementary Streams (PES)*, containing information on video, audio, data and synchronization of one or more programmes, and tables containing the Program Specific Information (PSI). These tables describe both the programmes and the PES necessary to combine to obtain a certain programme. In DVB systems, there are also service information tables (DVB-SI) which permit the creation of multichannel broadcast channels environments.

All the 188-byte packets which form part of MPEG-2 transport stream contain in their header a packet identifier (PID) which unequivocally associates it to a packetized elementary stream PES or a PSI/DVB-SI table.

The bit rate of a transport stream depends on the number of programmes that form it. This is limited by the maximum capacity of the transmission media which is used to transmit the MPEG-2 transport stream to the end user. In the case of the DVB modulation system, satellite and cable platforms have a greater transmission rate than the terrestrial platform.

The bit rate of a transport stream is the sum of the useful bit rate devoted to programmes and the bit rate of filler packets (NULL). The filler packets are usually introduced in the transport stream dynamically so that the total bit rate is approximately constant even when the useful bit rate of the different PES present marked variations over time.

Given the recent increase in the number of domestic DVB-T receivers and the expectations of increase in said number in the years remaining before the analogue switch off, there is a real need for cross-modulating RF DVB-S or DVB-C signals to DVB-T signals. This would allow the end users to have access to more than one digital television platform, using a single DVB-T receiver for it.

An approximation to the process of cross-modulation of DVB-C/S to DVB-T is already in existence in practice, consisting of using a transport stream remultiplexer. Patent EP 0 940 043 discloses a method and apparatus of this type. This solution is, in addition to expensive, fairly complex, since it entails generating a new transport stream from the transport stream obtained at the output of a DVB-C/S receiver. The creation of a new TS comprises eliminating certain programmes, regenerating the Program Clock Reference (PCR) information and modifying the PSI/DVB-SI tables. In general, this solution needs the intervention of personnel with advanced technical knowledge and is usually accompanied with the configuration of a fairly complex software application. All of this involves considerable drawbacks.

The present invention has the purpose of giving a simple, efficient and low-cost implementation solution to the previous drawbacks.

### Explanation of the invention

For said purpose, the object of the invention is, according to a first aspect, a method of cross-modulation of DVB-S or DVB-C signals to DVB-T signals by PID filtering, of new concept and functionality, which is essentially **characterized in that** the following phases are performed for all the initial transport stream packets:
read the PID identifier of each packet of the initial transport stream; and
if the PID identifier corresponds to a PID of a PES which must be eliminated, filter the PID, marking this as null packet (NULL), with the marker reserved for the NULL packets, without modifying the program clock reference of the packets or the PSI tables,
so that a filtered transport stream is generated (by this "*PID filtering*"):
   Optionally, the filtered transport stream can be introduced in a conventional DVB-T modulator to adapt the filtered useful bit rate to the useful bit rate required by said DVB-T modulator, to obtain the transport stream to modulate.

The phase of adapting the useful bit rate can be performed by:
storing in first place in a flexible intermediate queue-type FIFO memory, all the filtered packets which are not marked as NULL, and
later reinserting at the output of said FIFO as many NULL packets as necessary to reach the required bit rate depending on the configuration of the DVB-T modulator.

In a preferred embodiment, the initial transport stream TS is a MPEG-2 transport stream; the PID identifiers read are contained within the second and third byte of each packet of the transport stream TS; and if this PID identifier read corresponds to the PID of a PES which must be eliminated, this is substituted by the PID with the 0x1 FFF hexadecimal code identifying a NULL packet.

In accordance with a second aspect of the invention, another object thereof is an apparatus for the cross-modulation of DVB-S or DVB-C signals to DVB-T signals by PID filtering, for the embodiment of the previously defined method, which is essentially **characterized in that** it comprises a PID filter, adapted to read the PID identifier of each packet of the initial transport stream TSx, and to mark a PID as NULL packet, if it corresponds to a PID of a PES which must be eliminated, with the marker reserved for the NULL packets, without modifying the program clock reference of the packets or the PSI filters, the PID filter producing at its output a filtered transport stream TSy.

In accordance with another characteristic of the apparatus according to the invention, the PID filter is connected to a DVB-T modulator, to adapt the filtered useful bit rate to the useful bit rate required by said DVB-T modulator, to obtain a new cross-modulated DVB-T signal.

Persons skilled in the art will appreciate that the bit rate adaptation process proposed according to the present invention permits reducing the useful input bit rate of the DVB-C/S transport stream at a nominally lesser value than the bit rate of the DVB-T transport stream, eliminating for this certain programmes selected according to PID.

The PID filter substitutes the transport stream packets whose PID belongs to the set of PIDs we want to eliminate by NULL packets. This process does not alter the relative position of the packets within the transport stream, for which reason the program clock reference of each PES is not modified. Furthermore, the PID filtering does not modify the PSI/DVB-SI tables.

### Brief description of the drawings

Below, the description of the preferred embodiments of the present invention will be made, for the better understanding whereof drawings are attached, merely given by way of descriptive and non-limitative example, wherein:
- Fig. 1: is a scheme of a cross-modulation system wherein the method of the invention is applied, with its different elements; and
- Fig. 2: is a block diagram which illustrates an algorithm which implements the method according to the invention.

### Detailed description of the drawings

The system of the invention consists of a method whereby, in a cross-modulator 10, the format of a cable (DVB-C) or satellite (DBV-S) digital television signal is modified to DVB-T format (DVB is the abbreviation of "*Digital Video Broadcasting*"). In this way, the digital video signal - and with it also the audio signal- can be "interpreted" in conventional television sets equipped with a DTT 4 Set-Top-Box (STB) or next generation television sets with DTT 5 (IDTV) decoders integrated. This cross-modulation is principally needed since the DBV-S/C signals are different from the DVB-T signal, for which reason a television with commercial DTT receiver could not "understand" them and the viewing would be incorrect.

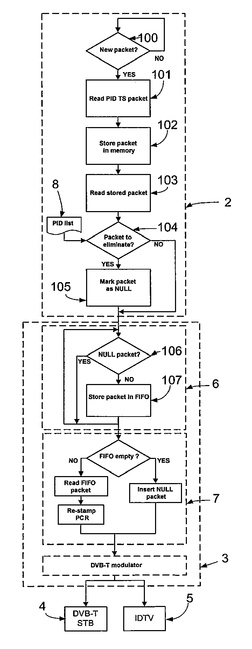

Fig. 1 shows that the DVB-S/C radiofrequency signal is demodulated in a demodulator 1, to obtain an initial transport stream TSx composed of PES elements or packets ("*Packetized Elementary Stream*") of bytes, as explained at the beginning.

Since the DVB-T transmission rate is less than the DVB-S/C rate, it is necessary that that PES packets be eliminated from this TSx stream to adapt the transport rate.

The TSx signal stream enters a PID filter 2, wherein all the stream packets (block 100 in Fig. 2) are analysed in the following form: in 101 (Fig. 2) the PID of each packet of the TSx stream is read; the packet is stored in the memory (block 102), the stored packet is read (block 103); the PES associated with the PID of the packet read is looked for in block 11 of Fig. 1, from the PID data to be eliminated stored in a list 8 (step 104); and if the PID identifier corresponds to a PID of a PES which must be eliminated, in block 12 of Fig. 1, the PID is "filtered" marking this as NULL packet with the marker reserved for NULL packets, without modifying the program clock reference of the packets or the PSI tables (block 105 of Fig. 2).

The filtered transport stream TSy is introduced in a DVB-T modulator 3 wherein it adapts the filtered useful bit rate until the useful bit rate required by said DVB-T modulator 3, to obtain, at the output thereof (see Fig. 1), a new cross-modulated DVB-T signal.

The phase of adapting the useful bit rate is carried out storing in a flexible intermediate queue-type FIFO memory 6, in block 107 of Fig. 2, all the filtered packets that are not marked as NULL, rejecting the NULL packets.

Once the non-NULL packet is stored in the FIFO, another packet is processed (output connection of 107 to input in 106 in Fig. 2), and, simultaneously, in another process concurrent with the writing, the FIFO packets are read (block 7 of Fig. 2).

In the bit rate adaptation block 7, FIFO packets are read at the bit rate required by the DVB-T modulator. When the FIFO is empty -the writing rate after rejecting the NULL packets is less than the reading rate -a NULL packet is inserted. The program clock reference (PCR) embedded in the MPEG-2 transport stream is also restamped to correct the PCR *jitter* caused by the relative change in position between packets resulting from the occasional insertion of a NULL packet. (In the field of telecommunications, *jitter* is usually understood as the variation in the delay, in simple terms, the difference in the time in which a packet arrives and the time which it is thought the packet will arrive in).

Subsequently, the filtered transport stream and with bit rate adapted to the requirements of the modulator is modulated to thus obtain a DVB-T signal in RF, which is introduced in an IDTV 5 or in a STB 4 set-top box.

Normally, the initial transport stream TSx will be built according to standard MPEG-2, which is the most typical at present. However, it is foreseen that the content of the TSx will, in the future, be coded in other video and audio standards which may appear, such as, for example, H.264 or VC-1. The PID identifiers read are contained within the second and third byte of each packet of the MPEG-2 transport stream. If this PID identifier read corresponds to the PID of a PES which must be eliminated, this is substituted, in block 12, by the PID with the 0x1FFF hexadecimal code identifying the NULL packet in the case of this MPEG-2 format.

## Claims

1. Method of cross-modulation of DVB-S or DVB-C signals to DVB-T signals by means of PID filtering, the signals being organized in transport streams of bits organized in packets, each one of which has a packet PID which comprises
demodulating, in a demodulator (1), a DVB-S or DVB-C signal, to obtain an initial transport stream TSx composed of elements of packets of bytes, from the stream whereof PES ("*Packetized Elementary Stream*") packets should be eliminated to adapt the transport rate,
**characterized in that,** the following phases are performed in a PID filter (2) for all the packets of the initial transport stream TSx:
read the PID identifier of each packet of the initial transport stream; and
if the PID identifier corresponds to a PID of a PES which must be eliminated, filter the PID marking this as null packet (NULL), with the marker reserved for the NULL packets, without modifying the program clock reference of the packets or the PSI tables,
generating a filtered transport stream TSy.

2. Method according to claim 1, **characterized in that** the filtered transport stream TSy is subjected to the following stages:
introducing the filtered transport stream TSy in a DVB-T modulator (3); and
adapting the filtered useful bit rate to the useful bit rate required by said DVB-T modulator, to obtain a new cross-modulated DVB-T.

3. Method according to claim 1, **characterized in that** the initial transport stream TSx is a MPEG-2 transport stream; the PID identifiers read are contained within the second and third byte of each packet of the transport stream TSx; and if this PID identifier read corresponds to the PID of a PES which must be eliminated, this is substituted by the PID with the 0x1FFF hexadecimal code identifying the NULL packet.

4. Apparatus for the cross-modulation of DVB-S or DVB-C signals to DVB-T signals by PID filtering, for the embodiment of the method according to claims 1 to 3, the signals being organized in transport streams of bits organized in packets, each one of which has a packet PID, which comprises a demodulator (1) of DVB-S or DVB-C signals, to obtain an initial transport stream TSx composed of elements or packets of bytes, from whose stream PES ("*Packetized Elementary Stream*") packets should be eliminated to adapt the transport rate, **characterized in that** it comprises a PID filter (2), adapted to read the PID identifier of each packet of the initial transport stream TSx, and to mark a PID as NULL packet, if it corresponds to a PID of a PES which must be eliminated, with the marker reserved for the NULL packets, without modifying the program clock reference of the packets or the PSI tables, producing the PID filter (2) at its output to filtered transport stream TSy.

5. Apparatus for the cross-modulation of DVB-S or DVB-C signals to DVB-T signals by PID filtering, according to claim 4, **characterized in that** it comprises, at the output of the PID filter (2), a DVB-T modulator (3), to adapt the filtered useful bit rate to the useful bit rate required by said DVB-T modulator, to obtain a new cross-modulated DVB-T signal.
